# EUROPÄISCHE PATENTANMELDUNG

(11) **EP 0 545 072 A2**
(43) Veröffentlichungstag der Anmeldung: **09.06.1993**
(21) Anmeldenummer: 92118518.7
(22) Anmeldetag: 29.10.1992
(51) Int. Cl.: C09B 67/00

(54) **Neue Kristallmodifikationen von C.I. Pigment Yellow 16**

(30) Priorität: 01.11.1991 DE 4136043
(71) Anmelder: HOECHST AKTIENGESELLSCHAFT, D-65926 Frankfurt am Main (DE)
(72) Erfinder: Rieper, Wolfgang, Dr., W-6000 Frankfurt/M. 1 (DE); Baier, Edwin, dr., W-6233 Kelkheim/Ts. (DE)

(57) **Zusammenfassung**

Die Erfindung betrifft drei neue Kristallmodifikationen (y-, δ-, ∈-Modifikation) von C.I. Pigment Yellow 16 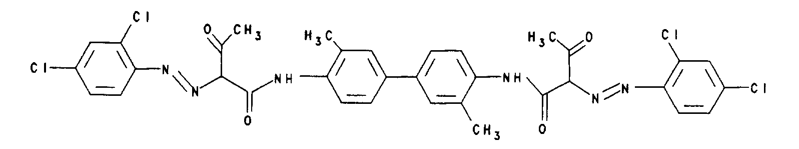
gekennzeichnet durch ihre charakteristischen Reflexe im Röntgenbeugungsspektrum.

Die Herstellung der neuen Kristallmodifikationen erfolgt durch Wärmebehandlung der bekannten a- oder β-Modifikation in ausgewählten organischen Lösemitteln.

## Beschreibung

Die Erfindung betrifft drei neue kristallographische Modifikationen (y- ,δ-,∈-Modifikation) des Disazopigmentes C.I. Pigment Yellow 16 (CI-No. 20040, CAS-Nr. 5979-28-2) der Konstitution:

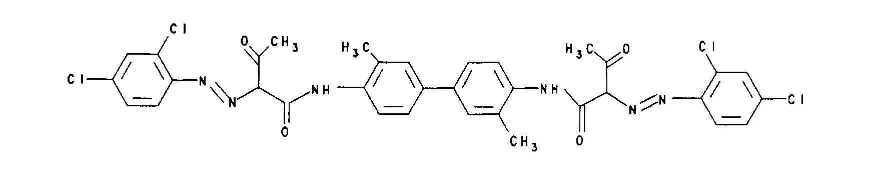

Von den bisher im Handel befindlichen Formen des Pigmentes sind zwei kristallographische Modifikationen (a- und β-Modifikation) bekannt, die in der diesbezüglichen Literatur allerdings nicht als solche gekennzeichnet sind.

Bei dem durch Kupplung zweier Äquivalente diazotierten 2,4-Dichloranilins auf ein Äquivalent der bifunktionellen Kupplungskomponente 3,3'-Dimethyl-4,4'-(bisacetoacetyl)-diamino-diphenyl erhaltenen Gelbpigment (Deutsches Reichspatent 386 054 analog Beispiel 1 oder FIAT-Bericht 1313, S. 473-475) handelt es sich um die a-Modifikation, während durch thermische Nachbehandlung des Kupplungsproduktes bei Temperaturen über 100 °C etwa in Gegenwart von Isobutanol (DE-AS 2 302 481, Beispiel 2) die β-Modifikation erhalten wird.

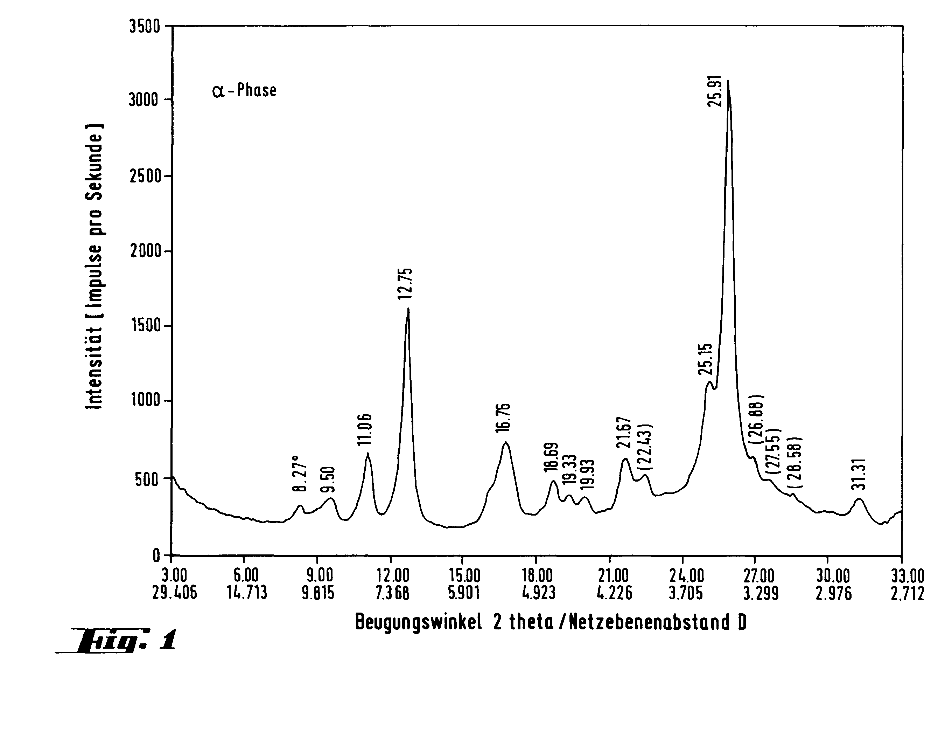

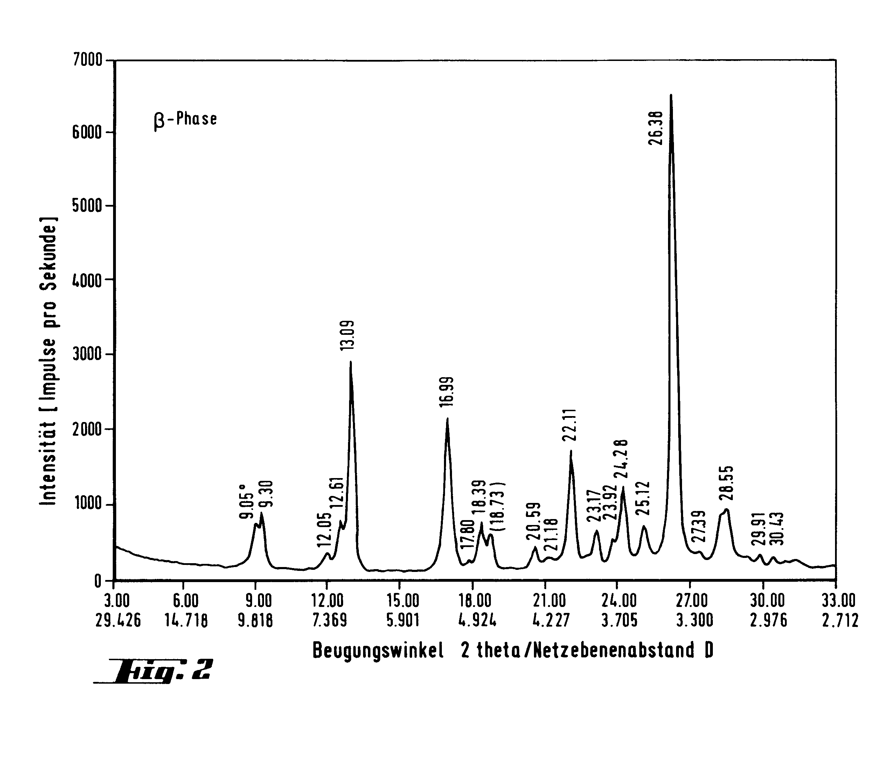

Diese beiden Modifikationen weisen in ihrem Röntgenbeugungsdiagramm mittels Cu-Ka-Strahlen bei folgenden Beugungswinkeln 2 υ charakteristische Reflexe (Genauigkeit ± 0,05 °) auf:
a-Modifikation (Abb. 1)
   Maximum hoher Intensität bei 25,91 °;
   Maxima mittlerer Intensität bei 12,75 °,16,76 ° und 25,15 °;
   Maxima geringer Intensität bei 9,5 °, 11,06 °, 18,69 °, 19,33 °, 21,67 _{°} und 31,31 °.
β-Modifikation (Abb. 2)
   Maximum hoher Intensität bei 26,38 °;
   Maxima mittlerer Intensität bei 13,09 °,17,0 ° und 22,11 °;

Maxima geringer Intensität bei 9,05 °, 9,30 °, 12,61 °, 18,39 °, 23,17 °, 23,92 °, 24,28 °, 25,12 °, 28,35 _{°} und 28,55 °.

Die Einteilung der Reflexe in solche hoher, mittlerer oder geringer Intensität bezieht sich auf die Messung relativer Intensitäten von Röntgenpulveraufnahmen des Pigmentes mit einem Szintillationszähler als Detektor, wobei diese bei dem jeweiligen Maximum relativ zum höchsten Maximum (= 100 %) bewertet sind. Als Reflexe hoher Intensität sind Werte zwischen 100 und etwa 50 %, als solche mittlerer Intensität zwischen etwa 50 und 20 % und als Reflexe geringer Intensität relative Werte zwischen etwa 20 und 5 % definiert. Werte geringerer relativer Intensitäten sind nicht erfaßt.

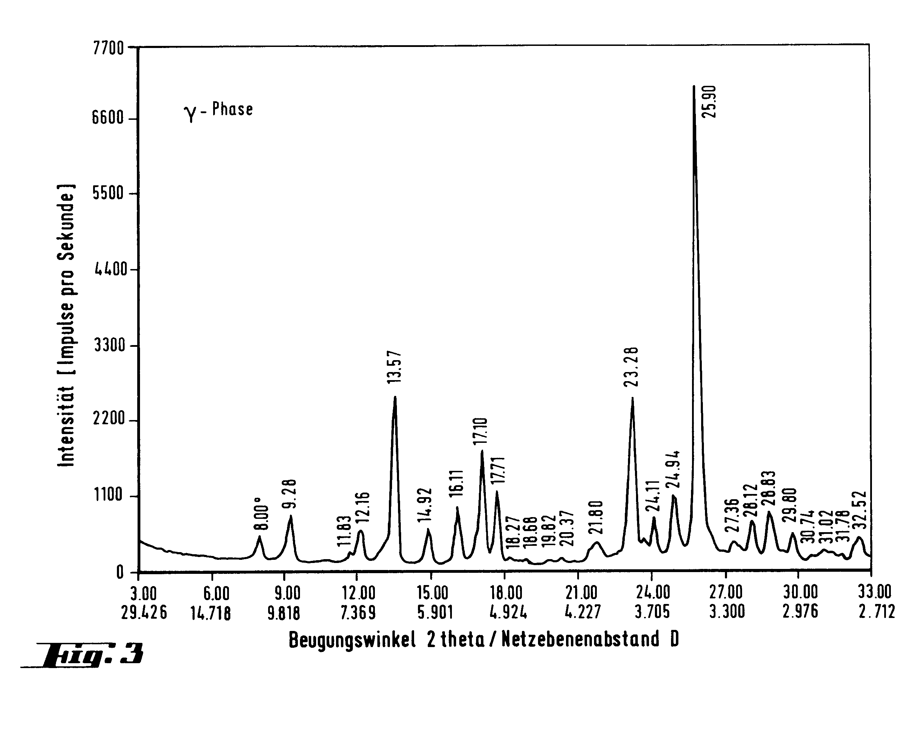

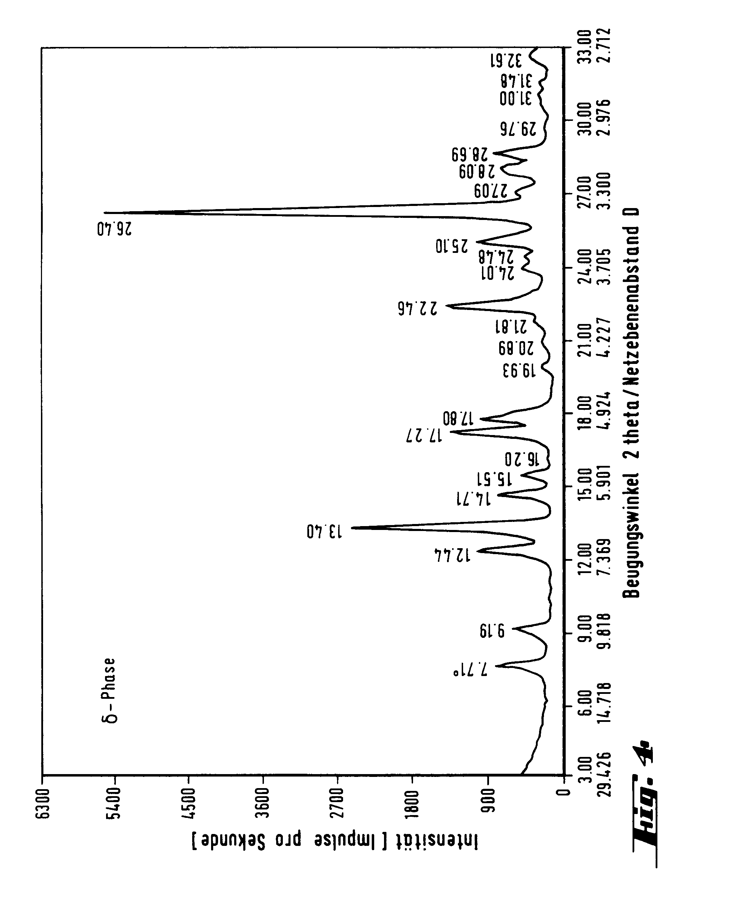

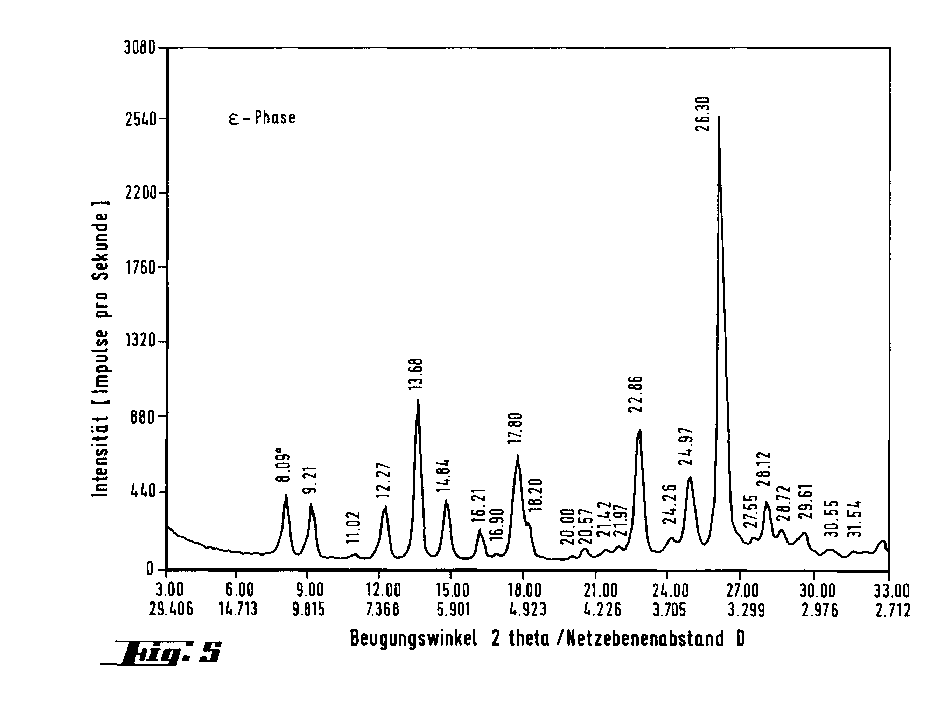

Es wurden nun überraschenderweise drei neue kristallographische Modifikationen (y- ,δ-, _{E}-Modifikation) des C.I. Pigment Yellow 16 gefunden, die durch folgende Reflexe (2 ) in ihren Röntgenbeugungsdiagrammen charakterisiert werden können, wobei sich die Intensitätsangaben wiederum auf relative Werte von Röntgenpulveraufnahmen der Pigmentproben beziehen:
y-Modifikation (Abb. 3)
   Maximum hoher Intensität bei 25,90 °;
   Maxima mittlerer Intensität bei 13,57 °, 17,10 ° und 23,27 °;
   Maxima geringer Intensität bei 9,28 °, 12,16 °, 14,92 °, 16,11 °, 21,79 °, 24,11 °, 24,94 °, 28,16 ° und 28,83 °.
δ-Modifikation (Abb. 4)
   Maximum hoher Intensität bei 26,40 °;
   Maxima mittlerer Intensität bei 13,39 °, 17,27 ° und 22,46 °;
   Maxima geringer Intensität bei 7,71 °, 9,19 °, 12,43 °, 14,71 °, 15,51 °, 17,80 °, 25,09 °, 28,09 ° und 28,69 °.
_{E}-Modifikation (Abb. 5)
   Maximum hoher Intensität bei 26,30 °;
   Maxima mittlerer Intensität bei 13,68 °, 17,80 ° und 22,86 °;
   Maxima geringer Intensität bei 8,09 °, 9,21 °, 12,27 °, 14,84 °, 16,21 °, 18,20 °, 24,97 _{°} und 28,12

Die erfindungsgemäßen neuen Pigmentmodifikationen weisen zum Teil deutliche coloristische Abweichungen etwa gegenüber der bekannten β-Modifikation auf: Die y-Modifikation ist grüner, die δ-Modifikation wesentlich röter, die _{E}-Modifikation etwas röter und reiner.

Die δ- und _{E}-Modifikationen zeichnen sich außerdem durch verbesserte Lichtechtheiten gegenüber der a- und β-Modifikation aus.

Die erfindungsgemäßen Kristallmodifikationen werden zweckmäßigerweise ausgehend von der a-Modifikation, d.h. dem unbehandelten Kupplungsprodukt C.I. Pigment Yellow 16, durch thermische Nachbehandlung in ausgewählten organischen Lösemitteln erhalten. Die erfindungsgemäßen Kristallmodifikationen können in der gleichen Weise auch ausgehend von der β-Modifikation oder einem Gemisch aus a- und β-Modifikation erhalten werden.

Die y-Modifikation entsteht durch Behandlung des trockenen pulverförmigen Pigments der a-Modifikation mit mindestens einem Lösungsmittel aus der Klasse der C1-C4-Alkylbenzole oder halogenierten Benzole, beispielsweise Toluol, Xylol, Chlorbenzol oder 1,2-Dichlorbenzol, oder Mischungen davon bei Temperaturen über 60 °C, vorzugsweise über 80 °C, insbesondere über 100 °C. Die Obergrenze der Behandlungstemperatur ist zweckmäßigerweise der Siedepunkt des jeweiligen Lösungsmittels bei Atmosphärendruck, es kann jedoch auch bei höherem Druck und entsprechend höherer Temperatur gearbeitet werden.

Die δ-Modifikation kann durch eine Behandlung der a-Form in N-Methyl-pyrrolidon bei Temperaturen zwischen 50 und 150 °C, vorzugsweise 60 und 80 °C, gewonnen werden, während sich die Umwandlung in die _{E}-Modifikation bei einer Lösemittelbehandlung der a- oder β-Modifikation oder einem Gemisch beider Modifikationen in Methyl-ethylketon bei Temperaturen zwischen 30 und 80 °C, vorzugsweise 60 und 80 °C, vollzieht.

Die Behandlungsdauer ist abhängig von der Behandlungstemperatur, sollte jedoch nicht weniger als 15 Minuten betragen. Längere Behandlungszeiten als 3 Stunden sind zwar möglich, aber aus ökonomischen Gründen nicht zweckmäßig.

Die erfindungsgemäßen neuen Modifikationen wie auch die bereits bekannte β-Modifikation des Pigment Yellow 16 lassen sich zum Teil ineinander, in einigen Fällen auch reversibel, umwandeln.

So erhält man beispielsweise durch thermische Behandlung einer Probe der y-Modifikation in Dimethylformamid die β-Modifikation und umgekehrt durch Chlorbenzol-Behandlung der β-Phase wiederum die y-Modifikation.

Auch die δ-Modifikation läßt sich mit Chlorbenzol in die y-Modifikation umwandeln. Verwendet man jedoch Dimethylformamid für die thermische Behandlung der δ-Phase, so entsteht wiederum die β-Modifikation.

Die erfindungsgemäßen Pigmentformen eignen sich zum Pigmentieren von Druckfarben, Lacken, Kunststoffen und wäßrigen Pigmentpräparationen. Aufgrund der höheren Stabilität der _{E}-Kristallmodifikation im Vergleich zu den übrigen Phasen eignet sich diese besonders zum Pigmentieren etwa von Druckfarben und Lacken, da dann eine coloristische Veränderung durch Phasenumwandlung im Anwendungsmedium auszuschließen ist.

In den folgenden Beispielen sind Teile auf das Gewicht bezogen.

### Beispiele

1) 10 Teile des nach der Kupplung von zwei Äquivalenten diazotierten 2,4-Dichloranilins auf ein Äquivalent 3,3'-Dimethyl-4,4'-(bisacetoacetyl)-diamino-diphenyl in der vorstehend genannten Weise erhaltenen C.I. Pigment Yellow 16 (a-Modifikation) wurden pulverförmig in 100 Teile Chlorbenzol eingetragen, die Suspension unter Rühren auf 125 °C erhitzt und zwei Stunden bei dieser Temperatur behandelt. Nach dem Abkühlen auf etwa 30 °C wurde filtriert, das Pigment mit Methanol gewaschen, dann getrocknet und gemahlen. Das so erhaltene Pigment wies im Röntgenbeugungsspektrum die für die y-Kristallmodifikation charakteristischen Reflexe auf.
2) 10 Teile der in der üblichen Weise erhaltenen a-Modifikation von C.I. Pigment Yellow 16 wurden in 100 Teilen N-Methyl-pyrrolidon unter Rühren 45 Minuten bei 60 bis 80 °C behandelt. Das nach dem Filtrieren, Waschen und Trocknen erhaltene sehr stark rotstichige Gelbpigment wurde über sein Röntgenbeugungsspektrum als δ-Modifikation identifiziert.
3) 10 Teile der a-Modifikation von C.I. Pigment Yellow 16 wurden in 100 Teile Methyl-ethyl-keton eingetragen und zwanzig Minuten bei 60 bis 65 °C gerührt. Man filtrierte anschließend, wusch das Pigment mit Methanol, trocknete und mahlte. Das nach dieser Behandlung isolierte Pigment lag in der _{E}-Modifikation vor, entsprechend den charakteristischen Reflexen im Röntgenbeugungsspektrum.
4) Man verfuhr wie in Beispiel 3, setzte jedoch die β-Modifikation des Pigmentes in Methyl-ethyl-keton um. Es entstand auch hierbei die _{E}-Modifikation von C.I. Pigment Yellow 16.
5) 10 Teile der nach Beispiel 1 erhaltenen y-Modifikation wurden in 100 Teilen Dimethylformamid dreißig Minuten einer thermischen Behandlung bei 90 bis 100 °C ausgesetzt. Dabei erhielt man nach dem Isolieren ein Umwandlungsprodukt, das durch seine Reflexe im Röntgenbeugungsspektrum als β-Modifikation identifiziert wurde.
6) Unterwirft man analog Beispiel 5 die nach Beispiel 2 erhaltene δ-Modifikation einer thermischen Behandlung in Dimethylformamid, so läßt sich auch hierbei die Umwandlung in die β-Kristallmodifikation von C.I. Pigment Yellow 16 vollziehen.
7) 10 Teile der nach Beispiel 2 erhaltenen δ-Modifikation wurden in 100 Teilen Chlorbenzol suspendiert und eine Stunde bei 100 bis 105 °C erhitzt. Dabei vollzog sich ein deutlicher Farbtonwechsel von rotstichigem nach mittlerem Gelb. Das isolierte Pigment wurde durch sein Röntgenbeugungsspektrum als y-Phase von C.I. Pigment Yellow 16 identifiziert.

## Patentansprüche

1. Kristallmodifikation von C.I. Pigment Yellow 16 (-y-Modifikation), gekennzeichnet durch seine charakteristischen Reflexe bei folgenden Beugungswinkeln 2 υ im Röntgenbeugungsdiagramm:
Maximum hoher Intensität bei 25,90 °;
Maxima mittlerer Intensität bei 13,57 °, 17,10 ° und 23,27 °;
Maxima geringer Intensität bei 9,28 °, 12,16 °, 14,92 °, 16,11 °, 21,79 °, 24,11 °, 24,94 °, 28,16 ° und 28,83 °.

2. Kristallmodifikation von C.I. Pigment Yellow 16 (8-Modifikation), gekennzeichnet durch seine charakteristischen Reflexe bei folgenden Beugungswinkeln 2 υ im Röntgenbeugungsdiagramm:
Maximum hoher Intensität bei 26,40 °;
Maxima mittlerer Intensität bei 13,39 °, 17,27 ° und 22,46 °;
Maxima geringer Intensität bei 7,71 °, 9,19 °, 12,43 °, 14,71 °, 15,51 °, 17,80 °, 25,09 °, 28,09 ° und 28,69 °.

3. Kristallmodifikation von C.I. Pigment Yellow 16 (_{E}-Modifikation), gekennzeichnet durch seine charakteristischen Reflexe bei folgenden Beugungswinkeln 2 υ im Röntgenbeugungsdiagramm:
Maximum hoher Intensität bei 26,30 °;
Maxima mittlerer Intensität bei 13,68 °, 17,80 ° und 22,86 °;
Maxima geringer Intensität bei 8,09 °, 9,21 °, 12,27 °, 14,84 °, 16,21 °, 18,20 °, 24,97 _{°} und 28,12 °.

4. Verfahren zur Herstellung der y-Kristallmodifikation von C.I. Pigment Yellow 16 nach Anspruch 1, dadurch gekennzeichnet, daß C.I. Pigment Yellow 16 in der a- oder β-Modifikation oder einem Gemisch beider Modifikationen in Gegenwart mindestens eines Lösungsmittels aus der Klasse der C1-C4-Alkylbenzole oder halogenierten Benzole auf eine Temperatur über 60 °C erhitzt wird.

5. Verfahren nach Anspruch 4, dadurch gekennzeichnet, daß das Lösungsmittel Chlorbenzol oder Toluol ist.

6. Verfahren nach Anspruch 4 oder 5, dadurch gekennzeichnet, daß auf eine Temperatur über 80 °C, vorzugsweise über 100 °C erhitzt wird.

7. Verfahren zur Herstellung der δ-Kristallmodifikation von C.I. Pigment Yellow 16 nach Anspruch 2, dadurch gekennzeichnet, daß C.I. Pigment Yellow 16 in der a- oder β-Modifikation oder einem Gemisch beider Modifikationen in Gegenwart von N-Methyl-pyrrolidon auf eine Temperatur zwischen 50 und 150 °C, vorzugsweise 60 und 80 °C, erhitzt wird.

8. Verfahren zur Herstellung der _{E}-Kristallmodifikation von C.I. Pigment Yellow 16 nach Anspruch 3, dadurch gekennzeichnet, daß C.I. Pigment Yellow 16 in der a- oder β-Modifikation oder ein Gemisch beider Modifikationen in Gegenwart von Methyl-ethyl-keton auf eine Temperatur zwischen 30 und 80 °C, vorzugsweise 60 bis 80 °C, erhitzt wird.

9. Verwendung von C.I. Pigment Yellow 16 (y-Modifikation) gemäß Anspruch 1 zum Pigmentieren von Druckfarben, Lacken, Kunststoffen und wäßrigen Pigmentpräparationen.

10. Verwendung von C.I. Pigment Yellow 16 (δ-Modifikation) gemäß Anspruch 2 zum Pigmentieren von Druckfarben, Lacken, Kunststoffen und wäßrigen Pigmentpräparationen.

11. Verwendung von C.I. Pigment Yellow 16 (_{E}-Modifikation) gemäß Anspruch 3 zum Pigmentieren von Druckfarben, Lacken, Kunststoffen und wäßrigen Pigmentpräparationen.
